# EUROPÄISCHE PATENTANMELDUNG

(11) **EP 3 537 288 A1**
(43) Veröffentlichungstag der Anmeldung: **11.09.2019**
(21) Anmeldenummer: 19159101.5
(22) Anmeldetag: 25.02.2019
(51) Int. Cl.: G06F 8/65, G01S 1/08, G06Q 10/08, G06Q 50/28

(54) **ORTUNGSSYSTEM UND VERFAHREN ZUM BETREIBEN EINES ORTUNGSSYSTEMS ZUR POSITIONSERFASSUNG WENIGSTENS EINER MOBILEN EINHEIT IN EINER WARENLOGISTIKEINRICHTUNG**

(30) Priorität: 05.03.2018 DE 102018104989
(71) Anmelder: Jungheinrich Aktiengesellschaft, 22047 Hamburg (DE)
(72) Erfinder: Ahrens, Stefan, 25462 Rellingen (DE); Heise, Sven-Ole, 24783 Osterrönfeld (DE); Kopelke, Jan, 22337 Hamburg (DE); Altmann, Tony, 24616 Brokstedt (DE); Grabbe, Florian, 22335 Hamburg (DE)
(74) Vertreter: Seemann & Partner Patentanwälte mbB

(57) **Zusammenfassung**

Die Erfindung betrifft ein Verfahren zum Betreiben eines Ortungssystems zur Positionserfassung wenigstens einer mobilen Einheit in einer Warenlogistikeinrichtung (2) sowie ein entsprechendes Ortungssystem. Das umfasst die folgenden Verfahrensschritte: Ermitteln einer auf einem ersten Speichermedium (25) einer ersten Einheit gespeicherten ersten Zustandsinformation (21a) einer ersten Benutzerkonfiguration (20a) des Ortungssystems, Ermitteln einer auf einem zweiten Speichermedium (25) einer zweiten Einheit gespeicherten zweiten Zustandsinformation (21b) einer zweiten Benutzerkonfiguration (20b) des Ortungssystems, Übertragen der ersten Zustandsinformation (21a) über eine drahtlose Datenverbindung (26) von der ersten Einheit an die zweite Einheit, Vergleichen der ersten Zustandsinformation (21a) mit der zweiten Zustandsinformation (21b) in der zweiten Einheit, Erzeugen wenigstens einer Steuerungsmitteilung in der zweiten Einheit, sofern die erste Zustandsinformation (21a) nicht mit der zweiten Zustandsinformation (21b) übereinstimmt.

## Beschreibung

Die Erfindung betrifft ein Verfahren zum Betreiben eines Ortungssystems zur Positionserfassung wenigstens einer mobilen Einheit in einer Warenlogistikeinrichtung. Ferner betrifft die Erfindung ein Ortungssystem zur Positionserfassung wenigstens einer mobilen Einheit in einer Warenlogistikeinrichtung.

In Warenlogistikeinrichtungen, wie z.B. Lagerhallen, ist eine Positionserfassung von verschiedenen beweglichen Objekten, wie beispielsweise von Personen mitgeführten Benutzerendgeräten, Flurförderzeugen oder Waren, für einen effizienten Betrieb von Vorteil. Mit Ortungssystemen, die eine derartige Positionserfassung ermöglichen, können beispielsweise die zurückgelegten Wege nachvollzogen und optimiert, Standorte überprüft, Kollisionen verhindert, Infrastrukturkomponenten wie beispielsweise Rolltore geschaltet und Zonen innerhalb eines Erfassungsbereichs des Ortungssystems definiert werden.

Ortungssysteme umfassen vielfach ortsfeste Einheiten und mobile Einheiten. Mittels der ortsfesten Einheiten wird ein Referenzsystem festgelegt, so dass sich in einem Erfassungsbereich des Ortungssystems die Position der mobilen Einheiten relativ zu den ortsfesten Einheiten bestimmen lassen, beispielsweise mittels Lateration. Ortsfeste Einheiten sind beispielsweise Ankerknoten, die an bestimmten Fixpunkten angebracht sind. Mobile Einheiten sind beispielsweise ein Benutzerendgerät, ein entsprechend eingerichtetes Steuerungssystem eines Flurförderzeugs oder eine an einem Flurförderzeug angebrachte Ortungseinheit. Auch das Flurförderzeug selbst kann als mobile Einheit angesehen werden.

Vielfach lassen sich für Ortungssysteme Benutzerkonfigurationen einrichten. In diesen Benutzerkonfigurationen sind beispielsweise die aktuellen Positionen der ortsfesten Einheiten gespeichert. Zudem können kreisförmige Zonen mit vorgebbaren Radius um die ortsfesten Einheiten definiert werden. Weiterhin können virtuelle Zonen in dem Erfassungsbereich festgelegt und die Position, Ausdehnung und Form der virtuellen Zonen in der Benutzerkonfiguration gespeichert werden. Mit den kreisförmigen Zonen und virtuellen Zonen können unterschiedliche Funktionen verknüpft werden. Beispielsweise kann es sich um Warnzonen handeln, in denen Flurförderzeuge mit verminderter Geschwindigkeit fahren.

Weiterhin sind Ortungssysteme vielfach dezentral eingerichtet. Ein solches dezentrales Ortungssystem benötigt keine zentrale Einheit, in der sämtliche Informationen des Ortungssystems zusammenlaufen. Stattdessen findet die Kommunikation direkt zwischen den einzelnen Einheiten des Ortungssystems ohne den Umweg über eine zentrale Einheit statt.

Bei einem derartigen dezentralen Ortungssystem ist es bei einer Aktualisierung der Benutzerkonfiguration jedoch erforderlich, die aktuelle Version der Benutzerkonfiguration an alle beteiligten Einheiten zu verteilen. Bei einer Warenlogistikeinrichtung mit einer großen Anzahl von Ankerknoten und Flurförderzeugen ist dies mit einem großen Arbeitsaufwand verbunden. Wird bei der Aktualisierung eine Einheit übersehen, kann dies den Betrieb des Ortungssystems der Warenlogistikeinrichtung beeinträchtigen. Wird das Ortungssystem zur Kollisionsvermeidung eingesetzt, so kann unter Umständen bei einer fehlerhaften Aktualisierung einer Benutzerkonfiguration einer Einheit der sicherere Betrieb in der Warenlogistikeinrichtung beeinträchtigt sein.

Es ist eine Aufgabe der Erfindung, ein Verfahren zum Betreiben eines Ortungssystems einer Warenlogistikeinrichtung sowie ein Ortungssystem anzugeben, wobei der Betrieb und insbesondere eine Aktualisierung des Ortungssystems mit geringerem Aufwand möglich sein soll.

Die Aufgabe wird gelöst durch ein Verfahren zum Betreiben eines Ortungssystems zur Positionserfassung wenigstens einer mobilen Einheit in einer Warenlogistikeinrichtung, wobei das Ortungssystem ein Datenkommunikationssystem umfasst, das wenigstens eine ortsfeste Einheit und die wenigstens eine mobile Einheit aufweist, wobei das Verfahren durch die folgenden Verfahrensschritte fortgebildet ist:
- Ermitteln einer auf einem ersten Speichermedium einer ersten Einheit gespeicherten ersten Zustandsinformation einer ersten Benutzerkonfiguration des Ortungssystems,
- Ermitteln einer auf einem zweiten Speichermedium einer zweiten Einheit gespeicherten zweiten Zustandsinformation einer zweiten Benutzerkonfiguration des Ortungssystems,
- Übertragen der ersten Zustandsinformation über eine drahtlose Datenverbindung von der ersten Einheit an die zweite Einheit,
- Vergleichen der ersten Zustandsinformation mit der zweiten Zustandsinformation in der zweiten Einheit,
- Erzeugen wenigstens einer Steuerungsmitteilung in der zweiten Einheit, sofern die erste Zustandsinformation nicht mit der zweiten Zustandsinformation übereinstimmt.

Unter einer Warenlogistikeinrichtung wird beispielsweise eine Lagerhalle oder Freifläche, eine Industriehalle, eine Werkstatthalle, ein zusammenhängender Komplex solcher Hallen oder Freiflächen sowie gegebenenfalls ein umliegendes Betriebsgelände verstanden.

Unter einer mobilen Einheit wird im Kontext der vorliegenden Beschreibung beispielsweise ein Benutzerendgerät, ein Steuerungssystem eines Flurförderzeugs, eine an einem Flurförderzeug insbesondere fest angebrachte Ortungseinheit oder auch ein Flurförderzeug als Ganzes verstanden. Diese sind jeweils mit Mitteln ausgestattet, eine drahtlose Datenverbindung zu einer anderen Einheit aufzubauen und Informationen/Daten über diese Datenverbindung zu übertragen.

Unter einer ortsfesten Einheit wird im Kontext der vorliegenden Beschreibung insbesondere ein Ankerknoten verstanden, der an einem festgelegten und bekannten Ort der Warenlogistikeinrichtung angeordnet ist. Die ortsfeste Einheit verfügt über Kommunikationsmittel zum Aufbau einer drahtlosen Datenverbindung und zur Übertragung von Informationen/Daten über diese Datenverbindung. Insbesondere sind die ortsfesten Einheiten Referenzpunkte eines Koordinatensystems, wobei sich über Abstandsmessungen zwischen den ortsfesten Einheiten und den mobilen Einheiten eine Position der mobilen Einheiten bestimmen lässt, wenn der Abstand von der mobilen Einheit zu einer ausreichend großen Anzahl von Ankerknoten bekannt ist. Zur Abstandsmessung kann beispielsweise eine Laufzeitmessung oder auch eine Messung der Signalstärke durchgeführt werden.

Die erste Einheit kann eine mobile Einheit oder eine ortsfeste Einheit sein. Auch die zweite Einheit kann eine mobile Einheit oder eine ortsfeste Einheit sein. Beide Einheiten umfassen jeweils ein Speichermedium, auf dem eine Benutzerkonfiguration des Ortungssystems gespeichert ist. Ebenfalls umfasst ist der Fall, dass die Benutzerkonfiguration einer Einheit oder beider Einheiten keine Konfigurationsinformationen enthält, also beispielsweise in der Benutzerkonfiguration keine Informationen zu den Positionen der ortsfesten Einheiten oder virtuellen Zonen gespeichert sind. Weiterhin ist auch der Fall umfasst, dass auf einem der Speichermedien überhaupt keine Benutzerkonfiguration gespeichert ist.

Die Zustandsinformation der Benutzerkonfiguration enthält Informationen über die Version der Benutzerkonfiguration, beispielsweise eine Versionsnummer und einen Zeitpunkt, zu dem die Benutzerkonfiguration erstellt wurde. Auch der Fall, in dem keine Benutzerkonfiguration vorhanden ist, soll als Zustandsinformation angesehen werden.

Die Zustandsinformationen der Benutzerkonfiguration der ersten Einheit und der zweiten Einheit werden ermittelt, beispielsweise durch einen Zugriff auf die jeweiligen Speichermedien. Die erste Einheit überträgt die erste Zustandsinformation an die zweite Einheit, woraufhin die zweite Einheit die erste Zustandsinformation mit der zweiten Zustandsinformation vergleicht. Stimmen die Zustandsinformationen nicht überein, erzeugt die zweite Einheit eine Steuerungsmitteilung.

Die Zustandsinformationen stimmen nicht überein, wenn sich die Versionsnummern und/oder die Zeitpunkte der Erstellung unterscheiden und/oder eine der Benutzerkonfigurationen keine Konfigurationsinformationen enthält und/oder auf einer der Einheiten keine Benutzerkonfiguration gespeichert ist.

Bevorzugt wird nach dem Ermitteln der ersten Zustandsinformation und der zweiten Zustandsinformation die zweite Zustandsinformation über die drahtlose Datenverbindung von der zweiten Einheit an die erste Einheit übertragen, wobei die erste Zustandsinformation mit der zweiten Zustandsinformation in der ersten Einheit verglichen wird, und wobei ferner in der ersten Einheit wenigstens eine Steuerungsmitteilung erzeugt wird, sofern die erste Zustandsinformation nicht mit der zweiten Zustandsinformation übereinstimmt.

Somit wird sowohl von der ersten Einheit als auch von der zweiten Einheit überprüft, ob die Zustandsinformationen der beiden Einheiten übereinstimmen. Auf diese Weise wird eine Redundanz geschaffen, so dass eine Steuerungsmitteilung auch dann erzeugt wird, wenn die Übertragung der ersten Zustandsinformation oder der Vergleich der ersten mit der zweiten Zustandsinformation in der zweiten Einheit fehlschlägt. Außerdem ist es in diesem Fall überflüssig, dass die zweite Einheit der ersten Einheit das Ergebnis des Vergleichs mitteilt. Durch das Erzeugen einer Steuerungsmitteilung durch die erste Einheit kann zudem diese Steuerungsmitteilung an eine weitere Einheit übermittelt werden, die in der Kommunikationsreichweite der ersten Einheit, nicht jedoch in der Kommunikationsreichweite der zweiten Einheit liegt.

Weiterhin bevorzugt umfassen die erste Zustandsinformation und die zweite Zustandsinformation jeweils eine Versionsinformation der Benutzerkonfiguration, wobei nach dem Vergleichen der ersten Zustandsinformation mit der zweiten Zustandsinformation die Einheit mit einer jüngeren Versionsinformation als aktuelle Einheit und die Einheit mit einer älteren Versionsinformation als inaktuelle Einheit festgelegt werden, sofern sich die Versionsinformationen voneinander unterscheiden, wobei insbesondere die zweite Einheit der ersten Einheit eine Versionsmitteilung als Steuerungsmitteilung überträgt, wobei die Versionsmitteilung Informationen darüber umfasst, ob die erste Einheit die aktuelle Einheit oder die inaktuelle Einheit ist oder ob beide Versionsinformationen identisch sind.

Die Versionsinformation ist ein Teil der Zustandsinformation und umfasst die Versionsnummer und/oder den Zeitpunkt der Erzeugung der Benutzerkonfiguration. Gemäß einer Ausführungsform wird die Einheit mit der höheren Versionsnummer als die aktuelle Einheit und die Einheit mit der niedrigeren Versionsnummer als die inaktuelle Einheit festgelegt. Gemäß einer alternativen Ausführungsform wird die Einheit mit dem jüngeren Zeitpunkt der Erstellung der Benutzerkonfiguration als die aktuelle Einheit und die Einheit mit dem älteren Zeitpunkt der Erstellung der Benutzerkonfiguration als die inaktuelle Einheit festgelegt.

Als Steuerungsmitteilung kann beispielsweise einem Nutzer des Ortungssystems mitgeteilt werden, dass die inaktuelle Einheit eine veraltete Benutzerkonfiguration verwendet. Insbesondere kann dem Nutzer die Position und/oder eine Kennung der inaktuellen Einheiten mitgeteilt werden.

Die Übertragung einer Versionsmitteilung an die erste Einheit ist vor allem in dem Fall sinnvoll, wenn das Vergleichen der ersten Zustandsinformation und der zweiten Zustandsinformation ausschließlich durch die zweite Einheit erfolgt.

Vorzugsweise ist wenigstens eine der Steuerungsmitteilungen eine Warnmeldung, die auf einer Anzeige der inaktuellen Einheit angezeigt und/oder an eine dritte Einheit übertragen wird.

Ist die inaktuelle Einheit ein Flurförderzeug, so wird beispielsweise die Warnmeldung auf einer Anzeige des Flurförderzeugs gut sichtbar für den Fahrer eingeblendet. Alternativ oder zusätzlich kann auch eine akustische Warnmeldung ausgegeben werden. Auf diese Weise wird dem Fahrer des Flurförderzeugs mitgeteilt, dass die auf dem Flurförderzeug gespeicherte Benutzerkonfiguration veraltet ist und er diese Benutzerkonfiguration aktualisieren sollte. Für den Fall, dass das Flurförderzeug die zweite Einheit ist, wird die Warnmeldung direkt auf der Anzeige des Flurförderzeugs eingeblendet. Ist das Flurförderzeug hingegen die erste Einheit, wird die Warnmeldung zunächst von der zweiten Einheit an das Flurförderzeug übertragen und vom Flurförderzeug auf der Anzeige angezeigt.

Handelt es sich bei der inaktuellen Einheit beispielsweise um einen Ankerknoten, so wird die Warnung an eine weitere Einheit, z.B. einen Steuerungsrechner, übertragen. Ein Nutzer oder Administrator, der Zugriff auf den Steuerungsrechner hat, wird über die veraltete Benutzerkonfiguration des Ankerknotens informiert und kann die Aktualisierung der Benutzerkonfiguration veranlassen. Weiterhin kann dieses Verfahren auch eingesetzt werden, wenn es sich bei der inaktuellen Einheit um ein Flurförderzeug oder eine andere Art von mobiler Einheit oder ortsfester Einheit handelt.

Gemäß einer Ausführungsform überträgt die aktuelle Einheit ihre Benutzerkonfiguration über die drahtlose Datenverbindung an die inaktuelle Einheit, wobei die inaktuelle Einheit ihre Benutzerkonfiguration aktualisiert, indem sie ihre Benutzerkonfiguration durch die empfangene Benutzerkonfiguration der aktuellen Einheit ersetzt.

Vorteilhaft wird dadurch eine schnelle und einfache Aktualisierung der Benutzerkonfiguration der inaktuellen Einheit erreicht. In dieser Ausführungsform ist es nicht erforderlich, dass eine aktuelle Version der Benutzerkonfiguration von einer dritten Einheit auf die inaktuelle Einheit übertragen wird, da dies direkt über die Datenverbindung zu der aktuellen Einheit geschieht. Es muss somit auch keine Datenverbindung zu einer weiteren Einheit aufgebaut werden, von der die inaktuelle Einheit eine aktuelle Benutzerkonfiguration erhalten könnte.

Ist die zweite Einheit die inaktuelle Einheit, so wird als Steuerungsmitteilung eine Aktualisierungsanfrage an die erste Einheit übertragen, die daraufhin die Benutzerkonfiguration der ersten Einheit an die zweite Einheit überträgt. Ist die zweite Einheit hingegen die aktuelle Einheit, so wird als Steuerungsmitteilung die Benutzerkonfiguration an die erste Einheit übertragen.

Handelt es sich bei der aktuellen Einheit um eine ortsfeste Einheit und bei der inaktuellen Einheit um eine mobile Einheit, so wird vorteilhaft die Benutzerkonfiguration der mobilen Einheit aktualisiert, während sie sich in Kommunikationsreichweite mit der ortsfesten Einheit befindet. Auf diese Weise wird ein einfaches Verfahren zur Verfügung gestellt, um schnell und unkompliziert die Benutzerkonfiguration auf allen Flurförderzeugen einer Warenlogistikeinrichtung zu aktualisieren. Die Aktualisierung erfolgt, während sich die Flurförderzeuge an aktualisierten Ankerknoten in der Warenlogistikeinrichtung vorbei bewegen. Dadurch entfällt die Notwendigkeit, die Flurförderzeuge einzeln und/oder an einem speziell dafür vorgesehenen Ort mit einer aktualisierten Benutzerkonfiguration auszustatten.

Gemäß einer weiteren Ausführungsform wird bei einer Unterbrechung der drahtlosen Datenverbindung während der Übertragung der Benutzerkonfiguration ein bereits übertragener erster Teil der Benutzerkonfiguration der aktuellen Einheit auf dem Speichermedium der inaktuellen Einheit gespeichert, wobei bei einer Wiederherstellung der drahtlosen Datenverbindung ein zweiter Teil der Benutzerkonfiguration der aktuellen Einheit an die inaktuelle Einheit übertragen wird.

Vorteilhaft ist es in dieser Ausführungsform vorgesehen, die Benutzerkonfiguration in mehreren Teilen auf die inaktuelle Einheit zu übertragen. Eine teilweise Übertragung der Benutzerkonfiguration ist sinnvoll, wenn die Benutzerkonfiguration eine große Datenmenge umfasst und wenigstens eine der Einheiten eine mobile Einheit ist. In diesem Fall kann es vorkommen, dass während des Zeitraums, in dem sich die mobile Einheit in Kommunikationsreichweite zu der anderen Einheit aufhält, die Benutzerkonfiguration nicht vollständig übertragen werden kann. Indem die inaktuelle Einheit den bereits übertragenen ersten Teil auf ihrem Speichermedium abspeichert, kann die Übertragung mit dem zweiten Teil der Benutzerkonfiguration fortgesetzt werden, wenn sich die beiden Einheiten erneut in Kommunikationsreichweite zueinander befinden. Die Benutzerkonfiguration kann ebenfalls in mehr als zwei Teilen an die inaktuelle Einheit übertragen werden, wenn dies erforderlich ist. Insbesondere kann der zweite Teil der Benutzerkonfiguration auch von einer dritten Einheit an die inaktuelle Einheit übertragen werden. Beispielsweise kann ein Flurförderzeug mit einer inaktuellen Benutzerkonfiguration einen ersten Teil der aktuellen Benutzerkonfiguration von einem ersten Ankerknoten, einen zweiten Teil von einem zweiten Ankerknoten und einen dritten Teil von einem weiteren Flurförderzeug erhalten. Dadurch wird die Benutzerkonfiguration des Flurförderzeugs aktualisiert, während es sich durch die Warenlogistikeinrichtung bewegt. Der Betrieb des Flurförderzeugs wird durch die Aktualisierung folglich nicht gestört.

Weiterhin bevorzugt ist wenigstens eine der Steuerungsmitteilungen eine Aktualisierungsanfrage, die über eine drahtgebundene oder drahtlose Datenverbindung an eine dritte Einheit übertragen wird, wobei in der dritten Einheit eine dritte Benutzerkonfiguration vorhanden ist, deren Versionsinformation zumindest so aktuell ist wie die jüngere Versionsinformation, wobei die dritte Einheit die dritte Benutzerkonfiguration an die inaktuelle Einheit überträgt und wobei die inaktuelle Einheit ihre Benutzerkonfiguration aktualisiert, indem sie ihre Benutzerkonfiguration durch die dritte Benutzerkonfiguration ersetzt.

Gemäß dieser Ausführungsform wird also nicht die Benutzerkonfiguration der aktuellen Einheit, sondern die dritte Benutzerkonfiguration der dritten Einheit an die inaktuelle Einheit übertragen. Die dritte Einheit kann beispielsweise ein Steuerrechner sein, auf dem die jeweils aktuellste Version der Benutzerkonfiguration gespeichert ist. Dadurch wird sichergestellt, dass die inaktuelle Einheit stets auf die aktuellste Version der Benutzerkonfiguration aktualisiert wird. Zudem kann zwischen der inaktuellen Einheit und der dritten Einheit auch eine Datenverbindung mit einer höheren Übertragungsrate als die drahtlose Datenverbindung zwischen der ersten Einheit und der zweiten Einheit vorgesehen sein, so dass die Benutzerkonfiguration schnell an die inaktuelle Einheit übertragen wird.

Vorzugsweise wird die aktualisierte Benutzerkonfiguration von der vormals inaktuellen Einheit an eine weitere Einheit über eine drahtlose Datenverbindung übertragen.

Vorteilhaft wird auf diese Weise erreicht, dass sich die aktuelle Version der Benutzerkonfiguration schnell auf alle Einheiten in der Warenlogistikeinrichtung verbreitet. Beispielsweise wird eine aktuelle Version der Benutzerkonfiguration von einem Ankerknoten an ein vorbeifahrendes Flurförderzeug übertragen. Dieses Flurförderzeug überträgt die aktuelle Version weiter an einen weiteren Ankerknoten und ein entgegenkommendes Flurförderzeug, welche die aktuelle Version wiederum weiter übertragen.

Bevorzugt findet die drahtlose Datenverbindung zwischen den Einheiten mittels Ultra-Breitband-Technologie, mittels WLAN (IEEE-802.11) oder ZigBee (IEEE-802.15.4) statt. Gemäß einer Ausführungsform ist es vorgesehen, dass ein erster Teil der drahtlosen Datenverbindung mit einer ersten Kommunikationstechnik, beispielsweise Ultra-Breitband-Technologie, und ein zweiter Teil der drahtlosen Datenverbindung über eine zweite Kommunikationstechnik, beispielsweise über ein drahtloses lokales Netzwerk (WLAN oder ZigBee), stattfindet. So werden z.B. zur Positionserfassung verwendete Informationen mittels Ultra-Breitband-Technologie und die Zustandsinformationen, die Steuerungsmitteilungen und die Benutzerkonfigurationen über WLAN oder ZigBee übertragen.

Die Aufgabe wird außerdem gelöst durch ein Ortungssystem zur Positionserfassung wenigstens einer mobilen Einheit in einer Warenlogistikeinrichtung, umfassend ein Datenkommunikationssystem, das wenigstens eine ortsfeste Einheit und die wenigstens eine mobile Einheit aufweist, wobei das Ortungssystem dazu eingerichtet ist, eine auf einem ersten Speichermedium einer ersten Einheit gespeicherte erste Zustandsinformation einer ersten Benutzerkonfiguration des Ortungssystems zu ermitteln und eine auf einem zweiten Speichermedium einer zweiten Einheit gespeicherte zweite Zustandsinformation einer zweiten Benutzerkonfiguration des Ortungssystems zu ermitteln, wobei die erste Einheit dazu eingerichtet ist, die erste Zustandsinformation über eine drahtlose Datenverbindung von der ersten Einheit an die zweite Einheit zu übertragen, wobei die zweite Einheit dazu eingerichtet ist, die erste Zustandsinformation mit der zweiten Zustandsinformation zu vergleichen und eine Steuerungsmitteilung zu erzeugen, sofern die erste Zustandsinformation nicht mit der zweiten Zustandsinformation übereinstimmt.

Auf das Ortungssystem treffen gleiche oder ähnliche Vorteile zu, wie sie bereits zuvor im Hinblick auf das Verfahren zum Betreiben eines Ortungssystems erwähnt wurden.

Bevorzugt ist die zweite Einheit dazu eingerichtet, die zweite Zustandsinformation über die drahtlose Datenverbindung von der zweiten Einheit an die erste Einheit zu übertragen, wobei die erste Einheit dazu eingerichtet ist, die erste Zustandsinformation mit der zweiten Zustandsinformation zu vergleichen und wenigstens eine Steuerungsmitteilung zu erzeugen, sofern die erste Zustandsinformation nicht mit der zweiten Zustandsinformation übereinstimmt.

Weiterhin bevorzugt umfassen die erste Zustandsinformation und die zweite Zustandsinformation jeweils eine Versionsinformation der Benutzerkonfiguration, wobei das Ortungssystem dazu eingerichtet ist, nach dem Vergleich der ersten Zustandsinformation mit der zweiten Zustandsinformation die Einheit mit einer jüngeren Versionsinformation als aktuelle Einheit und die Einheit mit einer älteren Versionsinformation als inaktuelle Einheit festzulegen, sofern sich die Versionsinformationen voneinander unterscheiden, wobei insbesondere die zweite Einheit dazu eingerichtet ist, an die erste Einheit eine Versionsmitteilung als Steuerungsmitteilung zu übertragen, wobei die Versionsmitteilung Informationen darüber umfasst, ob die erste Einheit die aktuelle Einheit oder die inaktuelle Einheit ist oder ob beide Versionsinformationen identisch sind.

Vorzugsweise ist wenigstens eine der Steuerungsmitteilungen eine Warnmeldung, wobei das Ortungssystem dazu eingerichtet ist, die Warnmeldung auf einer Anzeige der inaktuellen Einheit anzuzeigen und/oder an eine dritte Einheit zu übertragen.

Gemäß einer Ausführungsform ist die aktuelle Einheit dazu eingerichtet, ihre Benutzerkonfiguration über die drahtlose Datenverbindung an die inaktuelle Einheit zu übertragen, wobei die inaktuelle Einheit dazu eingerichtet ist, ihre Benutzerkonfiguration zu aktualisieren, indem sie ihre Benutzerkonfiguration durch die Benutzerkonfiguration der aktuellen Einheit ersetzt.

Gemäß einer alternativen Ausführungsform umfasst das Ortungssystem eine dritte Einheit, wobei in der dritten Einheit eine dritte Benutzerkonfiguration vorhanden ist, deren Versionsinformation zumindest so aktuell ist wie die jüngere Versionsinformation, wobei wenigstens eine der Steuerungsmitteilungen eine Aktualisierungsanfrage ist, wobei die zweite Einheit dazu eingerichtet ist, die Aktualisierungsanfrage über eine drahtgebundene oder drahtlose Datenverbindung an die dritte Einheit zu übermitteln, wobei die dritte Einheit dazu eingerichtet ist, die dritte Benutzerkonfiguration an die inaktuelle Einheit zu übertragen, wobei die inaktuelle Einheit dazu eingerichtet ist, ihre Benutzerkonfiguration zu aktualisieren, indem sie ihre Benutzerkonfiguration durch die dritte Benutzerkonfiguration ersetzt.

Bevorzugst ist wenigstens eine ortsfeste Einheit eine Quelleneinheit, wobei das Ortungssystem eine Steuereinheit umfasst, in der eine neue Benutzerkonfiguration erstellbar ist, wobei die Quelleneinheit dazu eingerichtet ist, die neue Benutzerkonfiguration von der Steuereinheit zu empfangen und ferner dazu eingerichtet ist, die neue Benutzerkonfiguration über die drahtlose Datenverbindung an die wenigstens eine mobile Einheit und/oder wenigstens eine weitere ortsfeste Einheit zu übertragen.

Die Quelleneinheit ist beispielsweise ein Ankerknoten, der speziell für die Übertragung der jeweils aktuellsten Benutzerkonfiguration eingerichtet ist. Dazu wird eine neue Benutzerkonfiguration auf der Steuereinheit, bei der es sich beispielsweise um einen Steuerrechner handelt, erstellt und diese neue Benutzerkonfiguration an die Quelleneinheit übertragen. An der Quelleneinheit vorbeifahrende Flurförderzeuge, andere mobile Einheiten und andere Ankerknoten in Kommunikationsreichweite werden durch die Quelleneinheit auf die neue Version der Benutzerkonfiguration aktualisiert. Dies ist beispielsweise dann sinnvoll, wenn die Quelleneinheit mit Mitteln zum Aufbau einer drahtlosen Datenverbindung mit einer besonders hohen Datenübertragungsrate eingerichtet ist, so dass die Quelleneinheit die Benutzerkonfiguration schnell an die anderen Einheiten übertragen kann.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine vereinfachte Darstellung einer Warenlogistikeinrichtung mit einem Ortungssystem mit mobilen Einheiten und ortsfesten Einheiten,
- Fig. 2: eine vereinfachte Darstellung einer Benutzerkonfiguration eines Ortungssystems,
- Fig. 3: eine vereinfachte Darstellung einer drahtlosen Datenverbindung zwischen zwei Einheiten zum Vergleich von Zustandsinformationen,
- Fig. 4a: eine vereinfachte Darstellung einer drahtlosen Datenverbindung zwischen zwei Einheiten zum Ausgeben einer Warnmitteilung,
- Fig. 4b: eine vereinfachte Darstellung einer drahtlosen Datenverbindung zwischen zwei Einheiten, wobei die Benutzerkonfiguration einer inaktuellen Einheit durch eine aktuelle Einheit aktualisiert wird,
- Fig. 4c: eine vereinfachte Darstellung einer drahtlosen Datenverbindung zwischen zwei Einheiten, wobei die Benutzerkonfiguration einer inaktuellen Einheit durch eine dritte Einheit aktualisiert wird,
- Fig. 5: eine vereinfachte Darstellung einer Verteilung einer aktuellen Benutzerkonfiguration an die Einheiten einer Warenlogistikeinrichtung durch eine Quelleneinheit.

In den Zeichnungen sind jeweils gleiche oder gleichartige Elemente und/oder Teile mit denselben Bezugsziffern versehen, so dass von einer erneuten Vorstellung jeweils abgesehen wird.

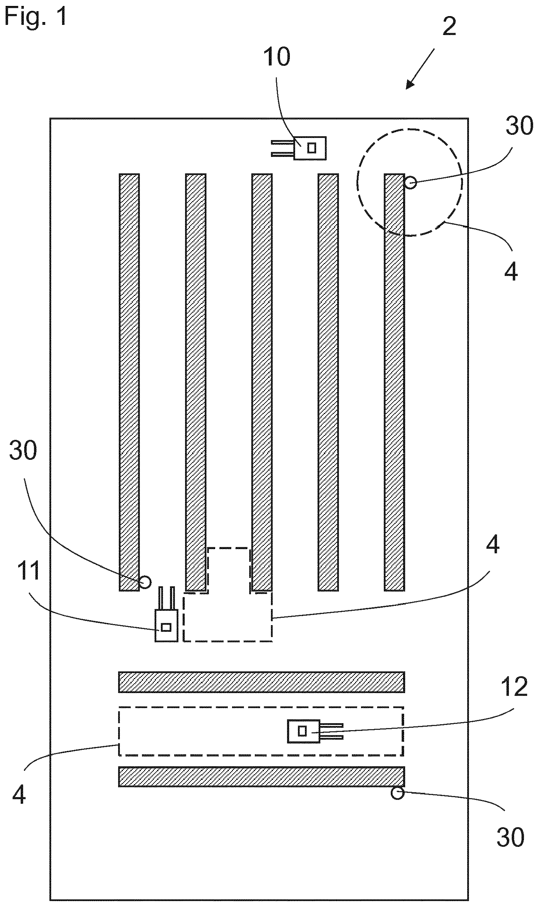

In Fig. 1 ist in einer vereinfachten Darstellung eine Warenlogistikeinrichtung 2 gezeigt, beispielsweise eine Lagerhalle. Die Warenlogistikeinrichtung 2 ist mit Ankerknoten 30 ausgestattet, die ortsfest in der Warenlogistikeinrichtung 2 angeordnet sind. Die Ankerknoten 30 legen Referenzpunkte für ein Koordinatensystem des Ortungssystems fest. Weiterhin sind die Ankerknoten 30 mit Kommunikationsmitteln zur Signalübertragung ausgestattet, beispielsweise zur Signalübertragung mittels Ultra-Breitband-Technologie. In der Warenlogistikeinrichtung 2 werden zudem Flurförderzeuge 10, 11, 12 eingesetzt, die ebenfalls mit Kommunikationsmitteln zur Signalübertragung ausgestattet sind. Mittels des Ortungssystems kann die Position der Flurförderzeuge 10, 11, 12 in der Warenlogistikeinrichtung 2 festgestellt werden, indem der Abstand der Flurförderzeuge 10, 11, 12 zu den Ankerknoten 30 bestimmt wird. Dies geschieht beispielsweise mittels Laufzeitmessung oder Messung der Signalstärke eines Signals zwischen den Ankerknoten 30 und den Flurförderzeugen 10, 11, 12.

Zudem sind in der Warenlogistikeinrichtung 2 Überwachungszonen 4 festgelegt. Bei diesen Überwachungszonen 4 kann es sich beispielsweise um eine Zone um einen Ankerknoten 30 handeln. Alternativ sind die Überwachungszonen als virtuelle Zonen eingerichtet, die einen Koordinatenbereich im Koordinatensystem des Ortungssystems umfassen. Derartige Überwachungszonen 4 können beispielsweise zum Definieren einer Zone mit einer Geschwindigkeitsbegrenzung für Flurförderzeuge 10, 11, 12 eingerichtet sein. Auf diese Weise können Kollisionen zwischen den Flurförderzeugen 10, 11, 12 vermieden werden.

Die Position, Form und Ausdehnung der Überwachungszonen 4, die Position der Ankerknoten 30 sowie eine den Überwachungszonen 4 bzw. den Ankerknoten 30 zugeordnete Objektaktion lassen sich vom Benutzer individuell festlegen und werden in einer Benutzerkonfiguration gespeichert. Unter einer Objektaktion wird beispielsweise ein Abbremsen eines Flurförderzeugs 10, 11, 12 auf eine zugelassene Höchstgeschwindigkeit verstanden (Schleichfahrt), wenn es sich in einer Überwachungszone 4 oder in einer kreisförmigen Zone um einen Ankerknoten 30 befindet.

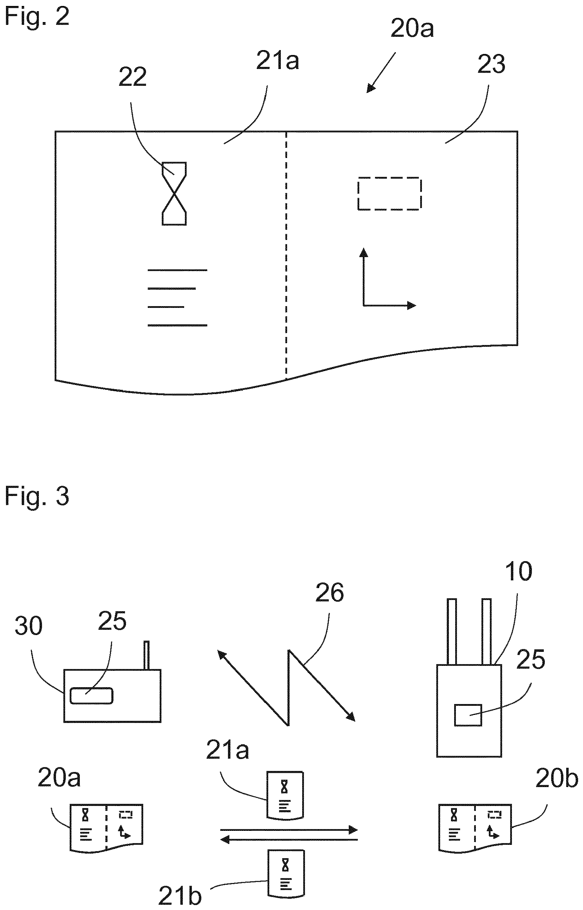

Fig. 2 zeigt eine vereinfachte Darstellung einer solchen Benutzerkonfiguration 20a. Die Benutzerkonfiguration 20a ist ein Datensatz, der Konfigurationsinformationen 23, wie beispielsweise die Position der Ankerknoten 30 und die Größe, Form und Ausdehnung der Überwachungszonen 4, sowie die den Überwachungszonen 4 bzw. den Ankerknoten 30 zugeordneten Objektaktionen. Weiterhin umfasst die Benutzerkonfiguration 20a Zustandsinformationen 21a, die wiederum die Versionsinformation 22 umfasst. Die Versionsinformation 22 ist beispielsweise die Versionsnummer und/oder der Zeitpunkt der Erzeugung der Benutzerkonfiguration 20a. Weiterhin umfasst die Zustandsinformation 21a Informationen darüber, ob überhaupt Konfigurationsinformationen 23 in der Benutzerkonfiguration 20a gespeichert sind.

In Fig. 3 ist vereinfacht gezeigt, wie die Benutzerkonfigurationen 20a, 20b von zwei Einheiten des Ortungssystems verglichen werden. Eine ortsfeste Einheit, in diesem Fall ein Ankerknoten 30, und eine mobile Einheit, in diesem Fall ein Flurförderzeug 10, umfassen jeweils ein Speichermedium 25, auf dem jeweils eine Benutzerkonfiguration 20a, 20b gespeichert ist. Zwischen den Einheiten wird eine drahtlose Datenverbindung 26 aufgebaut, über die wenigstens eine der Einheiten die Zustandsinformation 21a, 21b ihrer Benutzerkonfiguration 20a, 20b an die andere Einheit übermittelt. Die andere Einheit vergleicht diese Zustandsinformation 21a, 21b mit der Zustandsinformation 21a, 21b ihrer eigenen Benutzerkonfiguration 20a, 20b und erzeugt eine Steuerungsmitteilung, wenn die Zustandsinformationen 21a, 21b nicht übereinstimmen. Dies ist beispielsweise der Fall, wenn die Versionsinformationen 22 sich unterscheiden, die Konfigurationsinformationen 23 einer der Benutzerkonfigurationen 20a, 20b leer ist oder eine Einheit keine Benutzerkonfiguration 20a, 20b aufweist. Als Steuerungsmitteilung wird beispielsweise eine Versionsmitteilung an die andere Einheit übertragen, wobei die Versionsmitteilung Informationen darüber umfasst, ob die erste Einheit die aktuelle Einheit oder die inaktuelle Einheit ist oder ob beide Versionsinformationen identisch sind.

Alternativ können, wie in Fig. 3 gezeigt, beide Einheiten ihre Zustandsinformationen 21a, 21b an die andere Einheit übertragen. Der Vergleich der Zustandsinformationen 21a, 21b und ggf. die Erzeugung der Steuerungsmitteilung finden dann in beiden Einheiten statt.

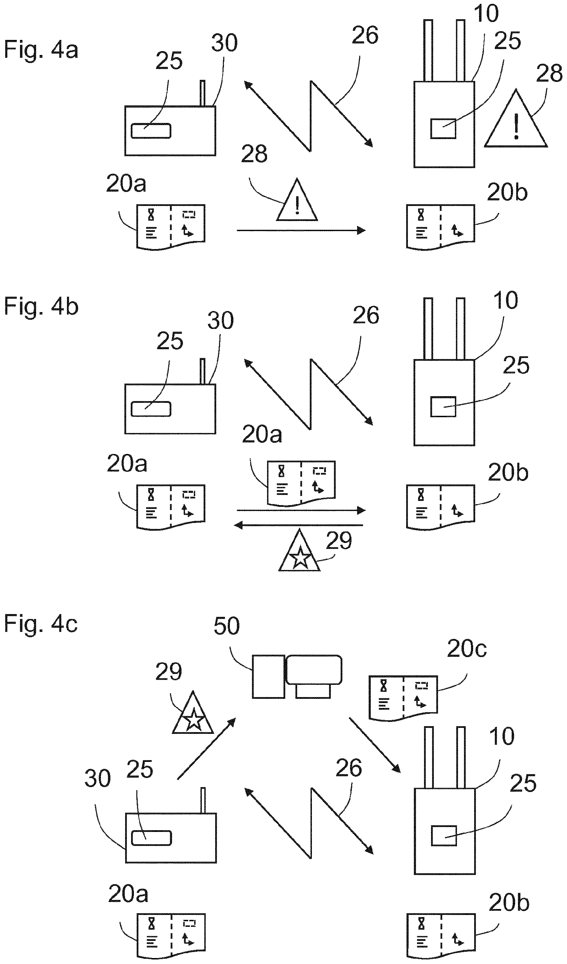

In den Figuren 4a bis 4c sind verschiedene Arten der Übertragung von Statusmitteilungen gezeigt, wobei die Statusmitteilungen erzeugt werden, wenn die Zustandsinformationen 21a, 21b nicht übereinstimmen. In dem in Fig. 4a gezeigten Beispiel ist die Benutzerkonfiguration 20b des Flurförderzeugs 10 nicht aktuell, da beispielsweise die Konfigurationsinformationen 23 nicht die Position von neu festgelegten Überwachungszonen 4 umfassen. In diesem Beispiel hat der Vergleich der Zustandsinformationen 21a, 21b in dem Ankerknoten 30 stattgefunden. Der Ankerknoten 30 erzeugt daraufhin eine Warnmeldung 28 und überträgt diese an das Flurförderzeug 10. Auf einer Anzeige des Flurförderzeugs 10 wird nun diese Warnmeldung 28 angezeigt, so dass ein Fahrer des Flurförderzeugs 10 über die veraltete Version der Benutzerkonfiguration 20b seines Flurförderzeugs 10 informiert wird. Findet der Vergleich der Zustandsinformationen 21a, 21b stattdessen im Flurförderzeug 10 statt, so wird die Warnmeldung 28 stattdessen direkt im Flurförderzeug 10 angezeigt. Alternativ kann die Warnmeldung 28 auch an eine dritte Einheit übertragen werden, beispielsweise an einen Computer eines Nutzers, der mit der Aktualisierung der Benutzerkonfigurationen 20a, 20b betraut ist.

Fig. 4b zeigt die gleiche Ausgangssituation wie in Fig. 4a. Statt jedoch eine Warnmeldung 28 zu erzeugen, wird die Benutzerkonfiguration 20b des Flurförderzeugs 10 direkt aktualisiert. Hat der Vergleich der Zustandsinformationen 21a, 21b in dem Flurförderzeug 10 stattgefunden, so überträgt das Flurförderzeug 10 eine Aktualisierungsanfrage 29 an den Ankerknoten 30. Dieser überträgt daraufhin seine Benutzerkonfiguration 20a an das Flurförderzeug 10. Das Flurförderzeug 10 ersetzt schließlich seine bisherige Benutzerkonfiguration 20b durch die aktuelle Benutzerkonfiguration 20a des Ankerknotens 30. Weist die inaktuelle Einheit keine Benutzerkonfiguration auf, so übernimmt die inaktuelle Einheit die Benutzerkonfiguration 20a der aktuellen Einheit. Hat der Vergleich der Zustandsinformationen 21a, 21b in dem Ankerknoten 30 stattgefunden, so wird die Benutzerkonfiguration 20a direkt an das Flurförderzeug 10 übertragen, eine Aktualisierungsanfrage 29 ist in diesem Fall überflüssig.

Weiterhin ist es möglich, dass wie in Fig. 4c gezeigt, die Aktualisierungsanfrage 29 an eine dritte Einheit, beispielsweise einen Computer 50, übertragen wird. Diese dritte Einheit überträgt dann eine dritte Benutzerkonfiguration 20c, die zumindest so aktuell ist, wie die Benutzerkonfiguration 20a der aktuellen Einheit, in diesem Fall also des Ankerknotens 30, an die inaktuelle Einheit, in diesem Falle also das Flurförderzeug 10.

Ebenfalls umfasst sind Fälle, bei denen es sich bei den zwei Einheiten um zwei Ankerknoten 30 oder zwei Flurförderzeuge 10 handelt.

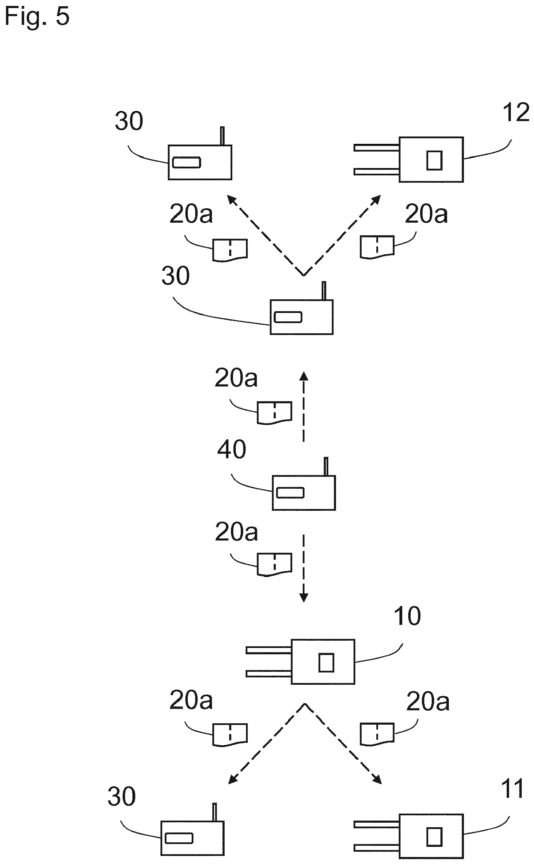

In Fig. 5 ist vereinfacht dargestellt, wie eine aktuelle Version einer Benutzerkonfiguration 20a über eine Quelleneinheit 40 in der Warenlogistikeinrichtung 2 verbreitet wird. Auf die Quelleneinheit 40, beispielsweise eine ortsfeste Einheit, wird die aktuelle Version der Benutzerkonfiguration 20a aufgespielt. Die Quelleneinheit 40 überträgt diese Benutzerkonfiguration 20a an ein vorbeifahrendes Flurförderzeug 10, welches diese Benutzerkonfiguration 20a wiederum an einen Ankerknoten 30 und ein weiteres Flurförderzeug 11 weiter überträgt. Weiterhin überträgt die Quelleneinheit 40 die Benutzerkonfiguration 20a an einen anderen Ankerknoten 30 in Kommunikationsreichweite, welcher wiederum die Benutzerkonfiguration 20a an einen dritten Ankernoten 30 und ein drittes Flurförderzeug 12 weiter überträgt. Auf diese Weise wird die neue Benutzerkonfiguration 20a schnell auf alle Einheiten der Warenlogistikeinrichtung 2 übertragen. Alternativ kann es auch vorgesehen sein, dass alle Einheiten direkt von der Quelleneinheit 40 eine aktuelle Benutzerkonfiguration 20a erhalten.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezuqszeichenliste

- 2: Warenlogistikeinrichtung
- 4: Überwachungszone
- 10, 11, 12: Flurförderzeug
- 20a, 20b, 20c: Benutzerkonfiguration
- 21a, 21b: Zustandsinformation
- 22: Versionsinformation
- 23: Konfigurationsinformationen
- 25: Speichermedium
- 26: drahtlose Datenverbindung
- 28: Warnmeldung
- 29: Aktualisierungsanfrage
- 30: Ankerknoten
- 40: Quelleneinheit
- 50: Computer

## Patentansprüche

1. Verfahren zum Betreiben eines Ortungssystems zur Positionserfassung wenigstens einer mobilen Einheit in einer Warenlogistikeinrichtung (2), wobei das Ortungssystem ein Datenkommunikationssystem umfasst, das wenigstens eine ortsfeste Einheit und die wenigstens eine mobile Einheit aufweist, **gekennzeichnet durch** die folgenden Verfahrensschritte:
- Ermitteln einer auf einem ersten Speichermedium (25) einer ersten Einheit gespeicherten ersten Zustandsinformation (21a) einer ersten Benutzerkonfiguration (20a) des Ortungssystems,
- Ermitteln einer auf einem zweiten Speichermedium (25) einer zweiten Einheit gespeicherten zweiten Zustandsinformation (21b) einer zweiten Benutzerkonfiguration (20b) des Ortungssystems,
- Übertragen der ersten Zustandsinformation (21a) über eine drahtlose Datenverbindung (26) von der ersten Einheit an die zweite Einheit,
- Vergleichen der ersten Zustandsinformation (21a) mit der zweiten Zustandsinformation (21b) in der zweiten Einheit,
- Erzeugen wenigstens einer Steuerungsmitteilung in der zweiten Einheit, sofern die erste Zustandsinformation (21a) nicht mit der zweiten Zustandsinformation (21b) übereinstimmt.

2. Verfahren nach Anspruch 1, **dadurch gekennzeichnet, dass** nach dem Ermitteln der ersten Zustandsinformation (21a) und der zweiten Zustandsinformation (21b) die zweite Zustandsinformation (21b) über die drahtlose Datenverbindung (26) von der zweiten Einheit an die erste Einheit übertragen wird, wobei die erste Zustandsinformation (21a) mit der zweiten Zustandsinformation (21b) in der ersten Einheit verglichen wird, und wobei ferner in der ersten Einheit wenigstens eine Steuerungsmitteilung erzeugt wird, sofern die erste Zustandsinformation (21a) nicht mit der zweiten Zustandsinformation (21b) übereinstimmt.

3. Verfahren nach Anspruch 1 oder 2, **dadurch gekennzeichnet, dass** die erste Zustandsinformation (21a) und die zweite Zustandsinformation (21b) jeweils eine Versionsinformation (22) der Benutzerkonfiguration (20a, 20b) umfassen, wobei nach dem Vergleichen der ersten Zustandsinformation (21a) mit der zweiten Zustandsinformation (21b) die Einheit mit einer jüngeren Versionsinformation (22) als aktuelle Einheit und die Einheit mit einer älteren Versionsinformation (22) als inaktuelle Einheit festgelegt werden, sofern sich die Versionsinformationen (22) voneinander unterscheiden, wobei insbesondere die zweite Einheit der ersten Einheit eine Versionsmitteilung als Steuerungsmitteilung überträgt, wobei die Versionsmitteilung Informationen darüber umfasst, ob die erste Einheit die aktuelle Einheit oder die inaktuelle Einheit ist oder ob beide Versionsinformationen (22) identisch sind.

4. Verfahren nach Anspruch 3, **dadurch gekennzeichnet, dass** wenigstens eine der Steuerungsmitteilungen eine Warnmeldung (28) ist, die auf einer Anzeige der inaktuellen Einheit angezeigt und/oder an eine dritte Einheit übertragen wird.

5. Verfahren nach Anspruch 3 oder 4, **dadurch gekennzeichnet, dass** die aktuelle Einheit ihre Benutzerkonfiguration (20a, 20b) über die drahtlose Datenverbindung (26) an die inaktuelle Einheit überträgt, wobei die inaktuelle Einheit ihre Benutzerkonfiguration (20a, 20b) aktualisiert, indem sie ihre Benutzerkonfiguration (20a, 20b) durch die empfangene Benutzerkonfiguration (20a, 20b) der aktuellen Einheit ersetzt.

6. Verfahren nach Anspruch 5, **dadurch gekennzeichnet, dass** bei einer Unterbrechung der drahtlosen Datenverbindung (26) während der Übertragung der Benutzerkonfiguration (20a, 20b) ein bereits übertragener erster Teil der Benutzerkonfiguration (20a, 20b) der aktuellen Einheit auf dem Speichermedium (25) der inaktuellen Einheit gespeichert wird, wobei bei einer Wiederherstellung der drahtlosen Datenverbindung (26) ein zweiter Teil der Benutzerkonfiguration (20a, 20b) der aktuellen Einheit an die inaktuelle Einheit übertragen wird.

7. Verfahren nach Anspruch 3 oder 4, **dadurch gekennzeichnet, dass** wenigstens eine der Steuerungsmitteilungen eine Aktualisierungsanfrage (29) ist, die über eine drahtgebundene oder drahtlose Datenverbindung an eine dritte Einheit übertragen wird, wobei in der dritten Einheit eine dritte Benutzerkonfiguration (20c) vorhanden ist, deren Versionsinformation (22) zumindest so aktuell ist wie die jüngere Versionsinformation (22), wobei die dritte Einheit die dritte Benutzerkonfiguration (20c) an die inaktuelle Einheit überträgt und wobei die inaktuelle Einheit ihre Benutzerkonfiguration (20a, 20b) aktualisiert, indem sie ihre Benutzerkonfiguration (20a, 20b) durch die dritte Benutzerkonfiguration (20c) ersetzt.

8. Verfahren nach einem der Ansprüche 5 bis 7, **dadurch gekennzeichnet, dass** die aktualisierte Benutzerkonfiguration (20a, 20b, 20c) von der vormals inaktuellen Einheit an eine weitere Einheit über eine drahtlose Datenverbindung (26) übertragen wird.

9. Verfahren nach einem der Ansprüche 1 bis 8, **dadurch gekennzeichnet, dass** die drahtlose Datenverbindung (26) zwischen den Einheiten mittels Ultra-Breitband-Technologie, WLAN oder ZigBee stattfindet, wobei insbesondere ein erster Teil der drahtlosen Datenverbindung (26) mit einer ersten Kommunikationstechnik, ferner insbesondere mittels Ultra-Breitband-Technologie, und ein zweiter Teil der drahtlosen Datenverbindung (26) über eine zweite Kommunikationstechnik, ferner insbesondere über WLAN oder ZigBee stattfindet.

10. Ortungssystem zur Positionserfassung wenigstens einer mobilen Einheit in einer Warenlogistikeinrichtung (2), umfassend ein Datenkommunikationssystem, das wenigstens eine ortsfeste Einheit und die wenigstens eine mobile Einheit aufweist, wobei das Ortungssystem dazu eingerichtet ist, eine auf einem ersten Speichermedium (25) einer ersten Einheit gespeicherte erste Zustandsinformation (21a) einer ersten Benutzerkonfiguration (20a) des Ortungssystems zu ermitteln und eine auf einem zweiten Speichermedium (25) einer zweiten Einheit gespeicherte zweite Zustandsinformation (21b) einer zweiten Benutzerkonfiguration (20b) des Ortungssystems zu ermitteln, wobei die erste Einheit dazu eingerichtet ist, die erste Zustandsinformation (21a) über eine drahtlose Datenverbindung (26) von der ersten Einheit an die zweite Einheit zu übertragen, wobei die zweite Einheit dazu eingerichtet ist, die erste Zustandsinformation (21a) mit der zweiten Zustandsinformation (21b) zu vergleichen und eine Steuerungsmitteilung zu erzeugen, sofern die erste Zustandsinformation (21a) nicht mit der zweiten Zustandsinformation (21b) übereinstimmt.

11. Ortungssystem nach Anspruch 10, **dadurch gekennzeichnet, dass** die zweite Einheit dazu eingerichtet ist, die zweite Zustandsinformation (21b) über die drahtlose Datenverbindung (26) von der zweiten Einheit an die erste Einheit zu übertragen, wobei die erste Einheit dazu eingerichtet ist, die erste Zustandsinformation (21a) mit der zweiten Zustandsinformation (21b) zu vergleichen und wenigstens eine Steuerungsmitteilung zu erzeugen, sofern die erste Zustandsinformation (21a) nicht mit der zweiten Zustandsinformation (21b) übereinstimmt.

12. Ortungssystem nach Anspruch 10 oder 11, **dadurch gekennzeichnet, dass** die erste Zustandsinformation (21a) und die zweite Zustandsinformation (21b) jeweils eine Versionsinformation (22) der Benutzerkonfiguration (20a, 20b) umfassen, wobei das Ortungssystem dazu eingerichtet ist, nach dem Vergleich der ersten Zustandsinformation (21a) mit der zweiten Zustandsinformation (21b) die Einheit mit einer jüngeren Versionsinformation (22) als aktuelle Einheit und die Einheit mit einer älteren Versionsinformation (22) als inaktuelle Einheit festzulegen, sofern sich die Versionsinformationen (22) voneinander unterscheiden, wobei insbesondere die zweite Einheit dazu eingerichtet ist, an die erste Einheit eine Versionsmitteilung als Steuerungsmitteilung zu übertragen, wobei die Versionsmitteilung Informationen darüber umfasst, ob die erste Einheit die aktuelle Einheit oder die inaktuelle Einheit ist oder ob beide Versionsinformationen (22) identisch sind.

13. Ortungssystem nach Anspruch 12, **dadurch gekennzeichnet, dass** wenigstens eine der Steuerungsmitteilungen eine Warnmeldung (28) ist, wobei das Ortungssystem dazu eingerichtet ist, die Warnmeldung (28) auf einer Anzeige der inaktuellen Einheit anzuzeigen und/oder an eine dritte Einheit zu übertragen.

14. Ortungssystem nach Anspruch 12 oder 13, **dadurch gekennzeichnet, dass** die aktuelle Einheit dazu eingerichtet ist, ihre Benutzerkonfiguration (20a, 20b) über die drahtlose Datenverbindung (26) an die inaktuelle Einheit zu übertragen, wobei die inaktuelle Einheit dazu eingerichtet ist, ihre Benutzerkonfiguration (20a, 20b) zu aktualisieren, indem sie ihre Benutzerkonfiguration (20a, 20b) durch die Benutzerkonfiguration (20a, 20b) der aktuellen Einheit ersetzt.

15. Ortungssystem nach Anspruch 12 oder 13, **dadurch gekennzeichnet, dass** das Ortungssystem eine dritte Einheit umfasst, wobei in der dritten Einheit eine dritte Benutzerkonfiguration (20c) vorhanden ist, deren Versionsinformation (22) zumindest so aktuell ist wie die jüngere Versionsinformation (22), wobei wenigstens eine der Steuerungsmitteilungen eine Aktualisierungsanfrage (29) ist, wobei die zweite Einheit dazu eingerichtet ist, die Aktualisierungsanfrage (29) über eine drahtgebundene oder drahtlose Datenverbindung an die dritte Einheit zu übermitteln, wobei die dritte Einheit dazu eingerichtet ist, die dritte Benutzerkonfiguration (20c) an die inaktuelle Einheit zu übertragen, wobei die inaktuelle Einheit dazu eingerichtet ist, ihre Benutzerkonfiguration (20a, 20b) zu aktualisieren, indem sie ihre Benutzerkonfiguration (20a, 20b) durch die dritte Benutzerkonfiguration (20c) ersetzt.

16. Ortungssystem nach einem der Ansprüche 12 bis 15, **dadurch gekennzeichnet, dass** wenigstens eine ortsfeste Einheit eine Quelleneinheit (40) ist, wobei das Ortungssystem eine Steuereinheit umfasst, in der eine neue Benutzerkonfiguration (20a, 20b, 20c) erstellbar ist, wobei die Quelleneinheit (40) dazu eingerichtet ist, die neue Benutzerkonfiguration (20a, 20b, 20c) von der Steuereinheit zu empfangen und ferner dazu eingerichtet ist, die neue Benutzerkonfiguration (20a, 20b, 20c) über die drahtlose Datenverbindung (26) an die wenigstens eine mobile Einheit und/oder wenigstens eine weitere ortsfeste Einheit zu übertragen.
